# EUROPEAN PATENT SPECIFICATION

(11) **EP 3 312 002 B1**
(45) Date of publication and mention of the grant of the patent: **19.02.2020**
(21) Application number: 16811766.1
(22) Date of filing: 17.06.2016
(51) Int. Cl.: B32B 15/20, B32B 15/082, B32B 15/088, B32B 15/09, B32B 27/00, B65D 65/40, B65D 75/36, B32B 1/02, B32B 7/12, B32B 27/08, B32B 27/28, B32B 27/30, B32B 27/32, B32B 27/34, B32B 27/36, B32B 27/18, B32B 3/28

(54) **LAMINATE FOR USE IN BLISTER PACK, AND BLISTER PACK USING SAME**
LAMINAT ZUR VERWENDUNG IN EINER BLISTERPACKUNG UND BLISTERPACKUNG DAMIT
STRATIFIÉ À UTILISER DANS UNE PLAQUETTE ALVÉOLÉE ET PLAQUETTE ALVÉOLÉE UTILISANT CELUI-CI

(30) Priority: 18.06.2015 JP 2015123072
(43) Date of publication of application: 25.04.2018
(73) Proprietor: Kyodo Printing Co., Ltd., Tokyo 112-8501 (JP)
(72) Inventor: HOSOI, Masayuki, Tokyo 112-8501 (JP); OGAWA, Naoki, Tokyo 112-8501 (JP); INOUE, Masa, Tokyo 112-8501 (JP); NARITA, Yuki, Tokyo 112-8501 (JP)
(74) Representative: Krauns, Christian
(86) International application number: PCT/JP2016/068176
(87) International publication number: WO 2016/204292

(56) References cited:
- EP-A1- 2 612 824
- WO-A1-2006/115264
- WO-A1-2012/029323
- WO-A1-2012/029899
- WO-A1-2015/004134
- JP-A- 2008 155 956
- JP-A- 2010 018 289

## Description

### TECHNICAL FIELD

The present invention relates to a laminate for a blister package (blister pack) and a blister package that uses said laminate.

### BACKGROUND ART

Although powdered pharmaceutical preparations are enclosed in thin-walled paper pouches or pouches made of plastic film, pharmaceutical preparations such as tablets or capsules are enclosed in blister packages referred to as press-through packages (PTP). The pharmaceutical preparation can be removed by breaking a sheet-like cover by pressing on the pharmaceutical preparation enclosed in the PTP with a finger. In addition, pharmaceutical preparations may also be enclosed in blister packages formed of two barrier laminates having a pocket for housing a pharmaceutical preparation, which are sealed in mutual opposition. In the case of this form, the blister package can also be used for powdered or liquid pharmaceutical preparations since the blister package is opened by ether cutting off one end of the blister package or pulling apart the two laminates.

Pharmaceutical preparations are subject to deterioration of the pharmacologically active ingredient thereof as a result of absorbing moisture. Consequently, a desiccant such as silica gel has conventionally been enclosed within an outer pouch that encloses the blister package. However, the work of placing a desiccant in the outer pouch is labor-intensive, and there is the risk of the desiccant being accidentally swallowed or consumed. In addition, there was also the problem of a low level of humidity being unable to be maintained within the blister package after opening the outer pouch, thereby resulting in progression of deterioration of the pharmaceutical preparation. Moreover, since certain pharmaceutical preparations are subject to oxidative degradation or emit a peculiar odor, there is also the need to be able to absorb gases such as oxygen or odorous gases present within the blister package.

In response thereto, Patent Document 1 discloses a technology whereby long-term stability of a pharmaceutical preparation is improved by laminating an adsorbing layer having an adsorbent within a blister package. In this technology, a dome-shaped pocket is first formed in a laminate consisting of a barrier layer in the form of a substrate and an absorbing layer. A pharmaceutical preparation in the form of a tablet is then placed in the pocket and sealed therein by a cover. According to this technology, the maintaining of a dry state, prevention of oxidation and efficient removal of odors are thought to be made possible even if a desiccant and the like is not included in the outer pouch.

In addition, since some pharmaceutical drugs are susceptible to ultraviolet light, if a transparent packaging container is used, there is the risk of degradation of the pharmacologically active ingredient. In response thereto, Patent Document 2 discloses a so-called aluminum blister package that employs a technology whereby an aluminum foil layer is also formed in the laminate for a blister package on the top side instead of only in a cover on the back side of the blister package. According to this technology, since an aluminum foil layer is provided in the blister package, although it is no longer possible to visualize the pharmaceutical preparation contained therein, ultraviolet light can be blocked and barrier properties can be further enhanced.

In an aspect that simply combines the aforementioned two technologies, problems such as rupturing of the roof of the dome or the formation of cracks in the skirt or shoulder of the dome occur when a dome-shaped pocket is formed in a laminate for a blister package. In order to overcome these problems, Patent Document 2 in particular discloses a laminate for a blister package having, in the following order, a substrate layer, aluminum foil layer, reinforcing layer and absorbing layer that is obtained by laminating a stiff reinforcing layer using a specific polymer between an aluminum foil layer and an absorbing layer.

### [Prior Art Documents]

### [Patent Documents]

Patent Document 1: International Publication No. WO 2006/115264
Patent Document 2: International Publication No. WO 2012/029323

### DISCLOSURE OF THE INVENTION

### [Problems to be Solved by the Invention]

In the laminate for a blister package of Patent Document 2, overall strength of the laminate is improved and forming defects are reduced by providing a stiff reinforcing layer. However, in the case of the laminate described in Patent Document 2, the inventors of the present invention found that, depending on the mold of the forming machine or the forming depth, problems may occur attributable to the formation of cracks or pinholes in the shoulders of the pocket of the blister package.

Therefore, an object of the present invention is to provide a laminate for a blister package that imparts adequate formability and is resistant to or free of the occurrence of forming defects even if the pocket of the blister package is formed to a comparatively large depth, and a blister package using that laminate.

### [Means for Solving the Problems]

The inventors of the present invention found that the aforementioned problems can be solved by the means indicated below.
[1] A laminate for a blister package, comprising, in the following order, a substrate layer, an aluminum foil layer, a first reinforcing layer, a second reinforcing layer and an absorbing layer, wherein, measured in compliance with JIS K7127, the absolute value of the difference between nominal tensile strain at break of the first reinforcing layer and nominal tensile strain at break of the second reinforcing layer is 10% or more.
[2] The laminate for a blister package described in [1], wherein, measured in compliance with JIS K7127, the nominal tensile strain at break of the first reinforcing layer is smaller than the nominal tensile strain at break of the second reinforcing layer.
[3] The laminate for a blister package described in any of [1] to [2], wherein, measured in compliance with JIS K7127, the nominal tensile strain at break of the first reinforcing layer is 20% to 70%.
[4] The laminate for a blister package described in any of [1] to [3], wherein, measured in compliance with JIS K7127, the nominal tensile strain at break of the second reinforcing layer is 70% to 260%.
[5] The laminate for a blister package described in any of [1] to [4], further having one or more reinforcing layers between the second reinforcing layer and the absorbing layer.
[6] The laminate for a blister package described in any of [1] to [5], wherein, the total thickness of the reinforcing layers is 70 µm to 200 µm.
[7] The laminate for a blister package described in any of [1] to [6], wherein the first reinforcing layer contains a resin selected from polyimide, polyvinyl chloride, polyethylene terephthalate and mixtures thereof.
[8] The laminate for a blister package described in any of [1] to [7], wherein the second reinforcing layer contains a resin selected from the group consisting of polyvinyl chloride, polyethylene terephthalate and mixtures thereof.
[9] The laminate for a blister package described in any of [1] to [8], wherein the absorbing layer comprises, in the following order, an outer skin layer on the side of the substrate layer, an absorbent-retaining layer having an absorbent and a binder resin, and an inner skin layer.
[10] The laminate for a blister package described in any of [1] to [9], wherein the substrate layer contains a resin selected from the group consisting of polyethylene-based resin, polyvinyl chloride, polyvinylidene chloride, polychlorotrifluoroethylene, polypropylene-based resin, saturated polyester, polyamide and mixtures thereof.
[11] A blister package, comprising the laminate described in any of [1] to [10], and a cover having an aluminum foil layer different from the aluminum foil layer of said laminate and a resin layer, wherein the absorbing layer of the laminate and the resin layer of the cover are at least partially adhered, a pocket is formed in the laminate, and contents can be contained between the laminate and the cover.
[12] A blister package, wherein two of the laminates described in any of [1] to [10] are at least partially adhered while mutually facing the absorbing layer, a pocket is formed in the two laminates, and contents can be contained in the pocket.
[13] A blister packaging product having the blister package described in [11] or [12] and contents contained in the pocket.

### [Effects of the Invention]

According to the present invention, a laminate for a blister package that imparts formability and is resistant to or free of the occurrence of forming defects even if the pocket of the blister package is formed to a relatively large depth, and a blister package using that laminate, can be provided.

### BRIEF DESCRIPTION OF THE DRAWINGS

FIG. 1 is a schematic view of a blister package of the present invention.
FIG. 2 is a schematic view showing another example of the blister package of the present invention.
FIG. 3 is a schematic view of the layer structure of the blister package of the present invention.

### EMBODIMENTS FOR CARRYING OUT THE INVENTION

### <Laminate for a Blister Package>

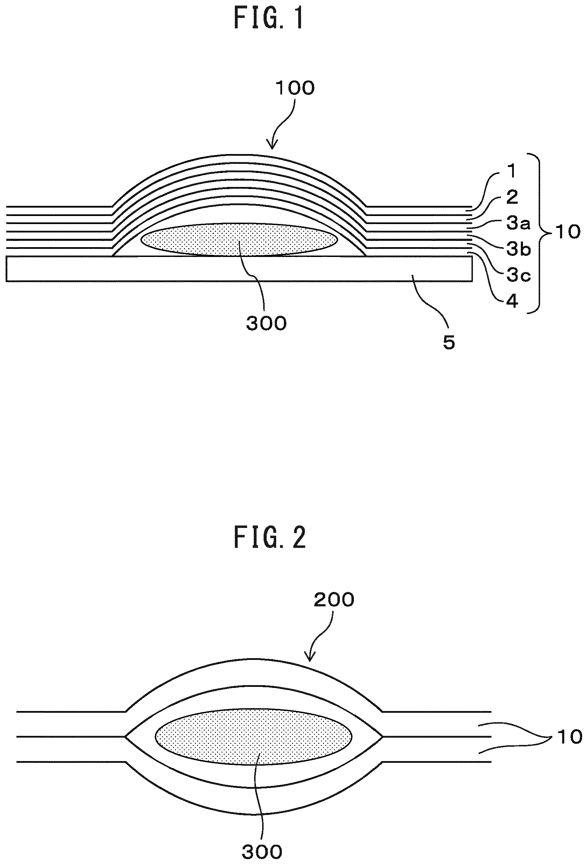

The laminate for a blister package of the present invention comprises, in the following order, a substrate layer, an aluminum foil layer, a first reinforcing layer, a second reinforcing layer and an absorbing layer. In addition, the blister package for a laminate of the present invention may also have one or more reinforcing layers between the second reinforcing layer and the absorbing layer. Moreover, the blister package for a laminate of the present invention may also have an adhesive layer between any two layers among the substrate layer, aluminum foil layer, first reinforcing layer, second reinforcing layer and absorbing layer. For example, as shown in FIG. 1, the laminate for a blister package 10 of the present invention has a substrate layer 1, an aluminum foil layer 2, a first reinforcing layer 3a, a second reinforcing layer 3b, an optional reinforcing layer 3c and an absorbing layer 4. Preferably, the laminate for a blister package 10 of the present invention contains, or is composed of, in the following order, an outermost layer in the form of the substrate layer 1, the aluminum foil layer 2, the first reinforcing layer 3a, the second reinforcing layer 3b, the optional reinforcing layer 3c and the absorbing layer 4 that adheres to a cover 5.

Furthermore, in the present description, although a "laminate composed of a layer A and a layer B" refers to a laminate substantially only comprising the layer A and the layer B, it also means that the laminate may also comprise other layers in addition to the layer A and the layer B if the advantageous effects of the present invention can be obtained in spite of the presence of the other layers or if the advantageous effects are not lost due to the other layers. For example, the laminate may be expressed as a "laminate composed of a layer A and a layer B", even if an anchor coat layer and the like is formed between the layer A and the layer B.

Examples of methods used to laminate at least two layers among the substrate layer, aluminum foil layer, first reinforcing layer, second reinforcing layer, optional reinforcing layer and absorbing layer include dry lamination and sandwich lamination. Dry lamination is a lamination method whereby an adhesive is coated and dried followed by applying pressure to cure the adhesive. In addition, sandwich lamination is a lamination method whereby a resin or adhesive resin composing each of the melted layers is extruded between a substrate and a film on the laminated side.

A pocket for containing contents such as a medical pharmaceutical preparation is formed in the laminate for a blister package. Examples of forming methods used when forming the pocket include plate-type air pressure forming, plug assist air pressure forming, drum-type vacuum forming and plug forming. Among these, plug forming is preferably for forming the pocket wherein the method uses a cylindrical rod (plug) having a round tip made of ultra-high molecular weight polyethylene resin having a viscosity-average molecular weight in excess of 1 million.

Without being bound by theory, in the case of laminating the first reinforcing layer 3a, the second reinforcing layer 3b and the optional reinforcing layer 3c as shown in FIG. 1, the laminate for a blister package 10 of the present invention is able to inhibit local elongation of the aluminum foil layer 2 when forming a pocket in the laminate for a blister package 10 in comparison with the case of a single reinforcing layer. As a result, the laminate for a blister package 10 is thought to be resistant to or free of the occurrence of forming defects even if a pocket is formed to a relatively large depth therein.

In addition, by particularly laminating the first reinforcing layer 3a and the second reinforcing layer 3b using a resin having a low nominal tensile strain at break, namely a hard resin, for the first reinforcing layer 3a and using a resin having a high nominal tensile strain at break, namely a soft resin, for the second reinforcing layer 3b, when forming a pocket in the laminate for a blister package 10, the second reinforcing layer 3b stretches to as to match the stretching of the easily stretched absorbing layer 4, and the first reinforcing layer stretches to as to reduce the load on the easily cracked aluminum foil layer 2. As a result, the load applied when forming a pocket in the laminate for a blister package 10 is gradually applied to the aluminum foil layer through the reinforcing layers, thereby making it possible to inhibit local elongation of the aluminum foil layer. As a result, the laminate for a blister package 10 is thought to be resistant to or free of the occurrence of forming defects even if a pocket is formed to a relatively large depth therein.

### (Substrate Layer)

The substrate layer is able to serve as the outermost layer of the laminate for a blister package. There are no particular limitations on the resin used for the substrate layer provided it is a resin that imparts suitable barrier properties and formability to the laminate for a blister package. Examples thereof include polyethylene-based resin, polyvinyl chloride, polyvinylidene chloride, polychlorotrifluoroethylene, polypropylene-based resin, saturated polyester, polyamide (such as Nylon, Nylon 6, Nylon 6,6 or Nylon MXD6) and mixtures thereof. The resin is preferably that which is able to prevent entry of moisture from the outside and demonstrate superior moisture resistance, examples of which include polypropylene-based resin, polyamide and saturated polyester in particular.

Furthermore, in the present description, polyethylene-based resin refers to a resin containing 30 mol% or more, 40 mol% or more, 50 mol% or more, 60 mol% or more, 70 mol% or more or 80 mol% or more of repeating units consisting of ethylene groups in the main chain of the polymer, and is selected from the group consisting of, for example, low density polyethylene (LDPE), linear low density polyethylene (LLDPE), medium density polyethylene (MDPE), high density polyethylene (HDPE), ethylene-acrylic acid copolymer (EAA), ethylene-methacrylic acid copolymer (EMAA), ethylene-ethyl acrylate (EEA), ethylene-methacrylate copolymer (EMA), ethylene-vinyl acetate copolymer (EVA), carboxylic acid-modified ethylene, carboxylic acid-modified ethylene-vinyl acetate copolymer, derivatives thereof and mixtures thereof.

In the present description, polypropylene-based resin refers to a resin having 30 mol% or more, 40 mol% or more, 50 mol% or more, 60 mol% or more, 70 mol% or more or 80 mol% or more of repeating units consisting of propylene groups in the main chain of the polymer, and is selected from the consisting of, for example, polypropylene (PP) homopolymer, random polypropylene (random PP), block polypropylene (block PP), chlorinated polypropylene, carboxylic acid-modified polypropylene, derivatives thereof and mixtures thereof.

The thickness of the substrate layer may be 10 µm or more, 20 µm or more or 30 µm or more, and 300 µm or less, 200 µm or less, 100 µm or less or 50 µm or less.

### (Aluminum Foil Layer)

The aluminum foil layer is used to provide the laminate with moisture and gas barrier properties. The aluminum foil of the aluminum foil layer may be pure aluminum-based aluminum foil or aluminum alloy-based aluminum foil. The thickness of the aluminum foil layer in order to impart suitable formability and elasticity to the laminate for a blister package may be 7 µm or more, 10 µm or more or 20 µm or more and 60 µm or less, 50 µm or less or 40 µm or less.

### (First Reinforcing Layer)

The first reinforcing layer is a resin layer used to improve formability and elasticity of the laminate for a blister package. Examples of resins used in the first reinforcing layer include polyethylene-based resin, polyvinyl chloride, polyvinylidene chloride, polychlorotrifluoroethylene, polypropylene-based resin, polyester (such as polyethylene terephthalate), polyamide (such as Nylon, Nylon 6, Nylon 6,6 or Nylon MXD6), polyimide and mixtures thereof. The thickness of the first reinforcing layer may be 10 µm or more, 15 µm or more, 25 µm or more, 30 µm or more, 40 µm or more or 50 µm or more, and 100 µm or less, 80 µm or less, 60 µm or less or 50 µm or less.

The lamination of a film having a low nominal tensile strain at break as measured in compliance with JIS K7127 for the first reinforcing layer inhibits the formation of cracks and cracking by reducing the load on the aluminum foil layer when forming a pocket. Nominal tensile strain at break of the first reinforcing layer is 10% or more, 20% or more, 30% or more, 40% or more, 50% or more, 60% or more, 80% or more, 100% or more or 150% or more, and 200% or less, 170% or less, 150% or less, 120% or less, 90% or less, 80% or less or 70% or less. If the nominal tensile strain at break is within the range of 20% to 70% in particular, the effect of reducing the load on the aluminum foil layer is enhanced due to the first reinforcing layer having suitable stiffness, thereby making this more preferable.

More specifically, nominal tensile strain at break as measured in compliance with JIS K 7127 is such that a sample having a length of 50 mm, for example, is indicated as having a nominal tensile strain at break of 100% in the case of breaking when stretched to 100 mm in the direction of stretching. Furthermore, in the present invention, nominal tensile strain at break of the first reinforcing layer and the second reinforcing layer can be measured using a tensile test measuring instrument (Strograph VES1D, Toyo Seiki Co., Ltd.) under conditions consisting of a sample width of 15 mm, sample length of 150 mm and pulling speed of 300 mm/min.

### (Second Reinforcing Layer)

The second reinforcing layer is a resin layer used to improve formability of the laminate for a blister package. Examples of films used for the second reinforcing layer include polyethylene-based resin, polypropylene-based resin, polyester (such as polyethylene terephthalate), polyvinyl chloride, polyvinylidene chloride and mixtures thereof. In addition, a barrier film, obtained by laminating a metal, semi-metal, vapor-deposited layer of an oxide thereof, or halogenated polymer layer onto these films, can also be used. For example, examples of metals, semi-metals or vapor-deposited layers of oxides thereof include an aluminum vapor-deposited film, silica vapor-deposited film, alumina vapor-deposited film and silica-aluminum binary vapor-deposited film, while examples of halogenated polymer layers include a polyvinylidene chloride-coated film and polyvinylidene fluoride-coated film. The thickness of the second reinforcing layer may be 10 µm or more, 15 µm or more, 25 µm or more, 30 µm or more, 40 µm or more or 50 µm or more, and 100 µm or less, 80 µm or less, 60 µm or less or 50 µm or less.

The lamination of a film having a high nominal tensile strain at break as measured in compliance with JIS K7127 inhibits the formation of cracks and cracking by reducing the load on the aluminum foil layer as a result of being able to match the stretching of the easily stretched absorbing layer during deep draw forming. The nominal tensile strain at break of the second reinforcing layer may be 50% or more, 70% or more, 100% or more, 120% or more, 150% or more or 200% or more, and 350% or less, 300% or less, 260% or less, 250% or less, 220% or less, 200% or less, 170% or less or 150% or less. If the nominal tensile strain at break is 260% or less in particular, the load on the aluminum foil layer can be further reduced due to the second reinforcing layer being harder and stiffer than the absorbing layer, thereby making this preferable. In addition, if the nominal tensile strain at break is 70% or more, the aluminum foil layer is able to match the absorbing layer more easily, thereby making this preferable.

In the case of having measured in compliance with JIS K7127, the absolute value of the difference between the nominal tensile strain at break of the first reinforcing layer and the nominal tensile strain at break of the second reinforcing layer is 10% or more, 20% or more, 40% or more, 60% or more, 80% or more, 100% or more or 200% or more, and 500% or less, 400% or less, 300% or less or 200% or less. More preferably, in the case of having measured in compliance with JIS K7127, the nominal tensile strain at break of the first reinforcing layer is smaller than the nominal tensile strain at break of the second reinforcing layer. As a result thereof, the second reinforcing layer is able to match the stretching of the easily stretched absorbing layer when forming a pocket in a blister package, and the load can be gradually applied to the aluminum foil layer, thereby enhancing the effect of inhibiting local elongation of the aluminum foil layer.

### (Optional Reinforcing Layer)

One or more optional reinforcing layers can be further laminated between the second reinforcing layer and the absorbing layer to improve formability of the laminate for a blister package. Examples of resins used as an optional reinforcing layer include polyethylene-based resin, polyvinyl chloride, polyvinylidene chloride, polychlorotrifluoroethylene, polypropylene-based resin, polyester (such as polyethylene terephthalate), polyamide (such as Nylon, Nylon 6, Nylon 6,6 or Nylon MXD6), polyimide and mixtures thereof. The thickness of the optional reinforcing layer may bed 10 µm or more, 15 µm or more, 25 µm or more, 30 µm or more, 40 µm or more or 50 µm or more, and 100 µm or less, 80 µm or less, 60 µm or less or 50 µm or less.

### (Thickness of Reinforcing Layers)

The total thickness of the first reinforcing layer, second reinforcing layer and optional reinforcing layer may be 70 µm or more, 80 µm or more, 90 µm or more, 100 µm or more, 120 µm or more, 150 µm or more or 170 µm or more, and 300 µm or less, 250 µm or less, 200 µm or less, 170 µm or less, 150 µm or less, 100 µm or less, 80 µm or less or 60 µm or less.

### (Absorbing Layer)

The absorbing layer is a layer that has the function of absorbency, and the long-term stability of contents such as pharmaceutical preparations can be improved by this layer. Although the absorbing layer may be a single absorbent-retaining layer containing an absorbent and a binder resin, it preferably contains, in the following order, an outer skin layer, absorbent-retaining layer containing an absorbent and binder resin, and an inner skin layer. In this case, the absorbent contained in the absorbent-retaining layer can be prevented from coming out during use, and is used while sandwiched between the upper and lower (inner and outer) skin layers since this facilitates production of the absorbing layer.

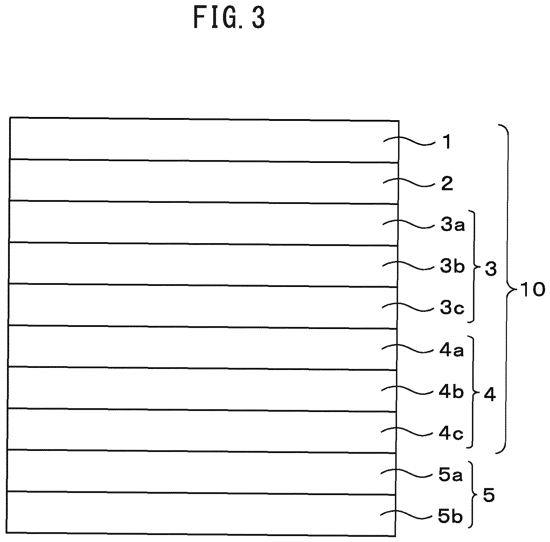

The outer skin layer is a layer used on the opposite side of the side containing the contents of the blister package (outside), while the inner skin layer is a layer used on the side containing the contents (inside). As shown in FIG. 1, in the laminate for a blister package 10 of the present invention, the absorbing layer 4 can be used with laminating the substrate layer 1, the aluminum foil layer 2, the first reinforcing layer 3a, the second reinforcing layer 3b, and the optional reinforcing layer 3c together. In addition, as shown in FIG. 3, for example, the absorbing layer 4 has an outer skin layer 4a, an absorbent-retaining layer 4b and an inner skin layer 4c.

The absorbent layer of the single absorbent-retaining layer can be produced by injection forming or extrusion forming such as inflation forming or T-die forming. In addition, an absorbing layer having a three-layer structure comprised of an outer skin layer, absorbent-retaining layer and inner skin layer can be produced by multilayer inflation forming. This method consists of producing a multilayer film by simultaneously co-extruding a plurality of resins into the shape of a tube with a plurality of extruding machines and then inflating the resins by blowing in air. In addition, an absorbing layer having a three-layer structure can be produced by forming the absorbent-retaining layer of the absorbing layer into the form of a film or sheet by extrusion forming or injection forming using the inflation method or T-die method, and then laminating the outer skin layer and inner skin layer by sandwiching the absorbent-retaining layer after having formed into films by a known method.

From the viewpoint of obtaining suitable formability and elasticity, the thickness of the absorbing layer may be 50 µm or more, 60 µm or more or 70 µm or more, and 200 µm or less, 100 µm or less, 90 µm or less or 80 µm or less.

### <Inner Skin Layer and Outer Skin Layer>

The inner skin layer and outer skin layer mainly comprise resin, and although they are able to contain an amount absorbent less than the that contained in the absorbent-retaining layer, the inner skin layer and outer skin layer preferably do not contain absorbent in consideration of the likelihood of the absorbent coming out during production or use of the blister package as well as ease of production of the absorbing layer. Examples of resins used for the inner skin layer and outer skin layer include polyethylene-based resin, polypropylene-based resin, polymethylpentene, saturated polyester, polyvinyl chloride, polystyrene, polycarbonate, polyamide, thermoplastic elastomers and mixtures thereof.

From the viewpoint of obtaining suitable formability and elasticity, the thickness of the inner skin layer and outer skin layer is 5 µm or more, 10 µm or more or 20 µm or more, and 50 µm or less, 40 µm or less, 30 µm or less, 20 µm or less or 15 µm or less.

### <Absorbent-Retaining Layer>

The absorbent-retaining layer has a structure in which the absorbent is dispersed in a binder resin. The absorbent-retaining layer functions as a layer that absorbs moisture, organic gases and inorganic gases within the blister package.

Examples of absorbents able to be used in the absorbent-retaining layer include inorganic absorbents such as chemical absorbents in the manner of calcium oxide, calcium chloride, calcium sulfate, magnesium sulfate or sodium sulfate, or physical absorbents in the manner of aluminum oxide, quicklime, silica gel or inorganic molecular sieves. Examples of inorganic molecular sieves include, but are not limited to, aluminosilicate minerals, clay, porous glass, microporous activated carbon, zeolite, activated carbon and compounds having an opening structure capable of allowing small molecules such as water to disperse therein. These inorganic absorbents allow the obtaining of high absorbency even at low temperatures, and absorbents able to demonstrate high absorbency even in environments at low relative humidity are particularly preferable for absorbing trace amounts of moisture contained in blister packages.

Examples of zeolite that can be used include natural zeolite, artificial zeolite and synthetic zeolite. Zeolite is a porous, granular substance used to separate substances according to differences in molecular size, has a structure consisting of uniform pores, and since it has the action of a type of sieve by absorbing small molecules that enter the cavities of the pores thereof, is capable of absorbing water (including steam and water vapor), organic gases and inorganic gases. An example of synthetic zeolite is a molecular sieve, and among these, molecular sieves having a pore diameter (absorption opening) of 0.3 nm to 1 nm in particular can be used. Normally, molecular sieves having a pore diameter of 0.3 nm, 0.4 nm, 0.5 nm or 1 nm are respectively referred to as molecular sieve 3A, molecular sieve 4A, molecular sieve 5A and molecular sieve 13X. A molecular sieve having an average particle diameter (particle diameter having an integrated value of 50% in a particle size distribution determined by laser diffraction scattering) of, for example, about 10 µm is used as a molecular sieve. In the present invention, different types of zeolite can be used as is appropriate according to such factors as the contents to be absorbed or the properties of those contents.

In addition, hydrophobic zeolite is used preferably particularly in the case of absorbing organic gas. Hydrophobic zeolite is the generic term for so-called high-silica zeolite in which the silica:alumina ratio has been enhanced by reducing the amount of aluminum atoms in the crystalline framework by subjecting to dealumination treatment. Hydrophilic zeolite refers to zeolite that more strongly absorbs non-polar substances as a result of losing affinity for polar substances such as water, thereby making it easier to absorb organic gases and the like. Hydrophobic zeolite in the form of a hydrophobic molecular sieve having a pore diameter of 0.6 nm to 0.9 nm can be used, and examples thereof include Abscents 1000, Abscents 2000 and Abscents 300 (manufactured by Union Showa K.K.). Pore diameter can be confirmed by structural analysis using X-ray diffraction. In addition, the average particle diameter (particle diameter having an integrated value of 50% in a particle size distribution determined by laser diffraction scattering) of the hydrophobic zeolite used is, for example, 3 µm to 5 µm.

In the case the absorbent is an oxygen absorbent, an inorganic oxygen absorbent such as cerium oxide, titanium oxide or iron powder may be used, or an organic oxygen absorbent such as polyvalent phenol compounds or ascorbic acid may be used. Examples of polyvalent phenol compounds include phenol, catechol, gallic acid, resorcinol, hydroquinone, benzenetriol, cresol and tannin.

From the viewpoint of absorption capacity, the absorbent can be contained in the absorbent-retaining layer within the range of 10% by weight or more, 20% by weight or more, 30% by weight or more, 40% by weight or more or 50% by weight or more based on the weight of the absorbent-retaining layer, and from the viewpoint of dispersibility in the binder resin and formability, can be contained within the range of 70% by weight or less, 60% by weight or less, 50% by weight or less or 40% by weight or less.

Examples of binder resins able to be used in the absorbent-retaining layer include polyethylene-based resin, polypropylene-based resin, saturated or unsaturated polyester, ionomers, polyvinyl chloride (PVC), polystyrene, derivatives thereof and mixtures thereof.

The thickness of the absorbent-retaining layer from the viewpoints of absorption capacity, formability and elasticity may be 10 µm or more, 20 µm or more, 30 µm or more or 50 µm or more, and 500 µm or less, 300 µm or less, 200 µm or less, 150 µm or less or 100 µm or less.

### (Adhesive Layer)

The laminate for a blister package of the present invention may have an adhesive layer between any two layers among the substrate layer, aluminum foil layer, first reinforcing layer, second reinforcing layer, optional reinforcing layer and absorbing layer. Examples of adhesives that may be used in this adhesive layer include urethane-based adhesives, olefin-based adhesives, butyl rubber-based adhesives, acrylic resin-based adhesives, polyester resin-based adhesives, epoxy resin-based adhesives and silicone resin-based adhesives in the case of adhering by dry lamination, or polyethylene-based resins in the case of adhering by sandwich lamination.

### (Blister Package and Blister Packaging Product)

The blister package of the present invention has the aforementioned laminate for a blister package and a cover. The absorbing layer of the laminate for a blister package and the cover are at least partially adhered. A blister packaging product containing contents within a pocket of the blister package can be fabricated by forming a pocket for containing contents such as a pharmaceutical preparation in the laminate for a blister package followed by adhering to the cover.

The cover contains, for example, a resin layer and a metal layer. A thermoplastic resin can be used for the resin layer. In addition, aluminum foil such as pure aluminum foil or aluminum alloy foil can be used for the metal layer. The cover is preferably of a form in which the aluminum foil is coated with the thermoplastic resin layer, and the thermoplastic resin of the cover and the layer (absorbing layer) used to adhere to the laminate for a blister package can contain the same resin from the viewpoint of enhancing adhesion. In addition, a form can also be adopted in which the aluminum foil is coated with an easy peeling resin such as a polyolefin-based polymer alloy or has an easy peeling film laminated thereon. In this case, contents can be removed easily since the blister package and cover are made to separate at the adhesive interface.

In another aspect of the blister package of the present invention, two laminates selected form the aforementioned laminates for a blister package are at least partially adhered while mutually opposing the absorbing layer. After having formed a pocket for containing contents in both of the laminates for a blister package, the contents are contained in the pocket and the absorbing layers of the two laminates for a blister package are adhered, thereby enabling the production of a blister packaging product containing contents in the pocket of a blister package.

There are no particular limitations on the content of the blister package of the present invention provided it is a substance that is susceptible to deterioration by contact with the outside air, and examples thereof include not only pharmaceutical preparations, but also foods, cosmetics, medical devices and electronic components. In addition, examples of pharmaceutical preparations include not only pharmaceutical preparations, but also detergents and agricultural chemicals.

FIG. 1 is a schematic view of a blister package 100. Here, a cover 5 is adhered to the laminate for a blister package 10 comprising, in the following order, the substrate layer 1, the aluminum foil layer 2, the first reinforcing layer 3a, the second reinforcing layer 3b, the optional reinforcing layer 3c and absorbing layer 4, and contents 300 are enclosed in a dome-shaped pocket formed in the laminate 10. Although not shown in the drawing, an adhesive layer is present between the substrate film and the absorbing film.

FIG. 2 is a schematic view of another aspect of a blister package 200. The absorbing layers of two laminates for a blister package 10 are adhered, and the contents 300 are enclosed in a pocket formed in the laminates 10.

FIG. 3 is a schematic view of the layer structure of the blister package 100 of the present invention. This view shows an end of the blister package 100 where the pocket is not formed, and the cover 5 is adhered to the laminate for a blister package 10 comprising, in the following order, the substrate layer 1, the aluminum foil layer 2, the first reinforcing layer 3a, the second reinforcing layer 3b, the optional reinforcing layer 3c and the absorbing layer 4. The absorbing layer 4 is composed of the outer skin layer 4a, the absorbent-retaining layer 4b and the inner skin layer 4c, and the cover 5 is composed of a thermoplastic resin layer 5a and a metal layer 5b.

### [Examples]

### (Example 1)

### <Production of Absorbing Layer>

Polypropylene (PP) resin pellets obtained by mixing 50% by weight each of a random PP (Novatec FG3DC, Japan Polypropylene Corp.) and another random PP (Wintec WFX4T, Japan Polypropylene Corp.) were prepared for use as the material of the inner and outer skin layers. The material for the absorbent-retaining layer was obtained by placing low density polyethylene (LDPE) (Petrocene 202, Tosoh Corp.) and a moisture absorbent in the form of zeolite (Molecular Sieve 4A, Union Showa K.K.) in a kneading extruder and kneading while heating and melting the resin, followed by extruding with the extruder and then cooling to obtain resin pellets for the absorbent-retaining layer. The zeolite content in the pellets for the absorbent-retaining layer was 46% by weight based on the weight of the pellets. A film serving as the absorbing layer was then formed by co-extrusion forming with an air-cooled inflation forming machine using the resin pellets for the inner and outer skin layers and the resin pellets for the absorbent-retaining layer. Inflation forming was carried out with a three-layer inflation forming machine (TUL-600R, Placo Co., Ltd.) at a resin temperature of 170°C and a feeding speed of 10 m/min.

### <Production of Laminate>

A first laminate comprising, in the following order, a substrate layer in the form of a polyamide film (Nylon), an aluminum foil (Al) layer and a first reinforcing layer in the form of a polyvinyl chloride (PVC) film (thickness: 60 µm, Sumilite VSS6107, Sumitomo Bakelite Co., Ltd., was obtained by laminating these layers with an adhesive layer interposed there between by dry lamination.

A second laminate was obtained by coating an adhesive on the first reinforcing layer of the first laminate and laminating a second reinforcing layer in the form of a PET film (thickness: 12 µm, Lumirror S10, Toray Industries, Inc.) by dry lamination.

A third laminate was obtained by coating an adhesive on the second reinforcing layer of the second laminate and laminating an absorbing layer by dry lamination. Subsequently, a sample for evaluation was obtained by aging the third laminate by storing for 7 days in an environment at 40°C.

A urethane-based adhesive containing a main agent (Takelac® XA1151, Mitsui Chemicals, Inc.) and a curing agent (Takenate® A12, Mitsui Chemicals, Inc.) at a weight ratio of 9:1 was used for the adhesive of the aforementioned laminate. Furthermore, the coated amount of adhesive between each layer was 5 g/m².

The layer composition of the sample for evaluation of Example 1 is shown in Table 1.

### (Example 2)

A sample for evaluation was obtained using the same procedure as Example 1 with the exception of using a polyvinyl chloride (PVC) film (thickness: 60 µm, Sumilite VSS6107, Sumitomo Bakelite Co., Ltd.) for the first reinforcing layer, and a PET film (thickness: 25 µm, Lumirror S10, Toray Industries, Inc.) for the second reinforcing layer. The layer composition of the sample for evaluation of Example 2 is shown in Table 1.

### (Example 3)

A sample for evaluation was obtained using the same procedure as Example 1 with the exception of using a PET film (thickness: 12 µm, Lumirror S10, Toray Industries, Inc.) for the first reinforcing layer, and a polyvinyl chloride (PVC) film (thickness: 60 µm, Sumilite VSS6107, Sumitomo Bakelite Co., Ltd.) for the second reinforcing layer. The layer composition of the sample for evaluation of Example 3 is shown in Table 1.

### (Example 4)

A sample for evaluation was obtained using the same procedure as Example 1 with the exception of using a PET film (thickness: 25 µm, Lumirror S10, Toray Industries, Inc.) for the first reinforcing layer, and a polyvinyl chloride (PVC) film (thickness: 60 µm, Sumilite VSS6107, Sumitomo Bakelite Co., Ltd.) for the second reinforcing layer. The layer composition of the sample for evaluation of Example 4 is shown in Table 1.

### (Example 5)

A sample for evaluation was obtained using the same procedure as Example 1 with the exception of using a polyvinyl chloride (PVC) film (thickness: 60 µm, Sumilite VSS6107, Sumitomo Bakelite Co., Ltd.) for the first reinforcing layer, and an alumina-deposited PET film (thickness: 12 µm, GX-P-F, Toppan Printing Co., Ltd.) for the second reinforcing layer. The layer composition of the sample for evaluation of Example 5 is shown in Table 1.

### (Example 6)

A sample for evaluation was obtained using the same procedure as Example 1 with the exception of using a polyvinyl chloride (PVC) film (thickness: 60 µm, Sumilite VSS6107, Sumitomo Bakelite Co., Ltd.) for the first reinforcing layer, and a polyvinyl chloride (PVC) film (thickness: 60 µm, Sumilite VSS6107, Sumitomo Bakelite Co., Ltd.) for the second reinforcing layer. The layer composition of the sample for evaluation of Example 6 is shown in Table 1.

### (Example 7)

A sample for evaluation was obtained using the same procedure as Example 1 with the exception of using a polyimide film (thickness: 40 µm) for the first reinforcing layer, and a polyvinyl chloride (PVC) film (thickness: 60 µm, Sumilite VSS6107, Sumitomo Bakelite Co., Ltd.) for the second reinforcing layer. The layer composition of the sample for evaluation of Example 7 is shown in Table 1.

### (Example 8)

A sample for evaluation was obtained using the same procedure as Example 1 with the exception of using a PET film (thickness: 25 µm, Lumirror S10, Toray Industries, Ltd.) for first, second, third, fourth and fifth reinforcing layers. The layer composition of the sample for evaluation of Example 8 is shown in Table 1.

### (Comparative Example 1)

A sample for evaluation was obtained using the same procedure as Example 1 with the exception of using a polyvinyl chloride (PVC) film (thickness: 60 µm, Sumilite VSS6107, Sumitomo Bakelite Co., Ltd.) for the first reinforcing layer, and not using a second reinforcing layer. The layer composition of the sample for evaluation of Comparative Example 1 is shown in Table 1.

### (Comparative Example 2)

A sample for evaluation was obtained using the same procedure as Example 1 with the exception of using a PET film (thickness: 25 µm, Lumirror S10, Toray Industries, Ltd.) for first reinforcing layer, and not using a second reinforcing layer. The layer composition of the sample for evaluation of Comparative Example 2 is shown in Table 1.

### (Comparative Example 3)

A sample for evaluation was obtained using the same procedure as Example 1 with the exception of not using a first reinforcing layer or second reinforcing layer. The layer composition of the sample for evaluation of Comparative Example 3 is shown in Table 1.

### (Reference Example 1)

A sample for evaluation was obtained using the same procedure as Example 1 with the exception of using a PET film (thickness: 125 µm, Lumirror S10, Toray Industries, Ltd.) for first reinforcing layer, and not using a second reinforcing layer. The layer composition of the sample for evaluation of Reference Example 1 is shown in Table 1.

### (Evaluation 1: Forming Test)

A pocket having a depth of 5.5 mm to 6.25 mm was formed at room temperature in the samples for evaluation of Examples 1 to 8, Comparative Examples 1 to 3 and Reference Example 1. The high-speed hydraulic press (HYP505H) manufactured by Japan Automatic Machine Co., Ltd. was used for the forming machine. The plug material consisted of ultra-high molecular weight polyethylene resin having a viscosity-average molecular weight of 5.5 million (New Light® NL-W, Saxin Corp.), and the plug diameter was 13 mm, the forming speed was 200 mm/s, the forming pressure was 7.7 MPa and the indentation retention time was 1 second. Here, the laminate was formed into a dome shape by immobilizing the periphery of the formed site while applying pressure followed by extruding the plug (protrusion) to a set length.

Here, the case of the absence of occurrence of visual defects such as cracks, scratches or indentations in the formed pocket able to be determined with the naked eye was evaluated as "G", while the case of the occurrence of visual defects such as cracks, scratches or indentations in the formed pocket able to be determined with the naked eye was evaluated as "NG". Testing was repeated ten times on each laminate. The results are shown in Table 1.

### (Evaluation 2: Tensile Test)

Nominal tensile strain at break relative to the direction of stretching of the first reinforcing layer and second reinforcing layer used in each example was measured in compliance with JIS K7127. Values were measured using a tensile test measuring instrument (Strograph VES1D, Toyo Seiki Co., Ltd.) under conditions consisting of a sample width of 15 mm, sample length of 150 mm and pulling speed of 300 mm/min. The results are shown in Table 1.

**[Table 1]**

| | | Thick. [µm] | Ex.1 | Ex.2 | Ex.3 | Ex.4 | Ex.5 | Ex.6 | Ex.7 | Ex.8 | Comp. Ex.1 | Comp. Ex.2 | Comp. Ex.3 | Ref. Ex.1 |
|---|---|---|---|---|---|---|---|---|---|---|---|---|---|---|
| Substrate layer | | 25 | Nylon | Nylon | Nylon | Nylon | Nylon | Nylon | Nylon | Nylon | Nylon | Nylon | Nylon | Nylon |
| Al layer | | 40 | Al | Al | Al | Al | Al | Al | Al | Al | Al | Al | Al | Al |
| 1st reinf. layer (thickness) [nominal tensile strain at break] | | 12∼125 | PVC (60µm) [22.07%] | PVC (60µm) [22.07%] | PET (12µm) [81.81%] | PET (25µm) [174.67%] | PVC (60µm) [22.07%] | PVC (60µm) [22.07%] | PI (40µm) [29.57%] | PET (25µm) [174.67%] | PVC (60µm) [22.07%] | PET (25µm) [174.67%] | - | PET (125 µm) |
| 2nd reinf. layer (thickness) [nominal tensile strain at break] | | 12∼60 | PET (12µm) [81.81%] | PET (25µm) [174.67%] | PVC (60µm) [22.07%] | PVC (60µm) [22.07%] | Alumina vapor-deposited PET (12µm) [129.83%] | PVC (60µm) [22.07%] | PVC (60µm) [22.07%] | PET (25µm) [174.67%] | - | - | - | - |
| 3rd reinf. layer (thickness) [nominal tensile strain at break] | | 25 | - | - | - | - | - | - | - | PET (25µm) [174.67%] | - | - | - | - |
| 4th reinf. layer (thickness) [nominal tensile strain at break] | | 25 | - | - | - | - | - | - | - | PET (25µm) [174.67%] | - | - | - | - |
| 5th reinf. layer (layer thickness) [nominal tensile strain at break] | | 25 | - | - | - | - | - | - | - | PET (25µm) [174.67%] | - | - | - | - |
| Absorb. layer | Outer Layer | 20 | PP | PP | PP | PP | PP | PP | PP | PP | PP | PP | PP | PP |
| | Absorb. Retain. layer | 90 | Zeolite 46 wt% + LDPE 54 wt% | Zeolite 46 wt% + LDPE 54 wt% | Zeolite 46 wt% + LDPE 54 wt% | Zeolite 46 wt% + LDPE 54 wt% | Zeolite 46 wt% + LDPE 54 wt% | Zeolite 46 wt% + LDPE 54 wt% | Zeolite 46 wt% + LDPE 54 wt% | Zeolite 46 wt% + LDPE 54 wt% | Zeolite 46 wt% + LDPE 54 wt% | Zeolite 46 wt% + LDPE 54 wt% | Zeolite 46 wt% + LDPE 54 wt% | Zeolite 46 wt% + LDPE 54 wt% |
| | Inner layer | 20 | PP | PP | PP | PP | PP | PP | PP | PP | PP | PP | PP | PP |

| Forming Test Results | | | | | | | | | | | | | | |
|---|---|---|---|---|---|---|---|---|---|---|---|---|---|---|
| Forming indentation depth (mm) | | 5.50 | G:10 | G:10 | G:10 | G:10 | G:10 | G:8 | G:6 | G:10 | G:2 | G:8 | G:0 | G:10 |
| | | | NG:0 | NG:0 | NG:0 | NG:0 | NG:0 | NG:2 | NG:4 | NG:0 | NG:8 | NG:2 | NG:10 | NG:0 |
| | | 5.75 | G:10 | G:10 | G:10 | G:10 | G:10 | G:5 | G:0 | G:10 | G:0 | G:2 | G:0 | G:9 |
| | | | NG:0 | NG:0 | NG:0 | NG:0 | NG:0 | NG: 5 | NG:10 | NG:0 | NG:10 | NG:8 | NG:10 | NG:1 |
| | | 6.00 | G:10 | G:10 | G:8 | G:10 | G:10 | G:3 | G:0 | G:10 | G:0 | G:0 | G:0 | G:7 |
| | | | NG:0 | NG:0 | NG:2 | NG:0 | NG:0 | NG: 7 | NG:10 | NG:0 | NG:10 | NG:10 | NG:10 | NG:3 |
| | | 6.25 | G:3 | G:2 | G:1 | G:0 | G:8 | G:0 | G:0 | G:3 | G:0 | G:0 | G:0 | G:0 |
| | | | NG:7 | NG:8 | NG:9 | NG:10 | NG:2 | NG:10 | NG:10 | NG: 7 | NG:10 | NG:10 | NG:10 | NG:10 |

As can be understood from the results of Table 1, Examples 1 to 8, having a first reinforcing layer, second reinforcing layer and optional reinforcing layer, demonstrated a greater reduction in forming defects in the case of forming the pocket of the blister package to a relatively large depth in comparison with Comparative Examples 1 to 3, having only a first reinforcing layer or no reinforcing layers.

In addition, in the case of having measured in compliance with JIS K7127, Examples 1 to 5, having different values for nominal tensile strain at break between the first reinforcing layer and second reinforcing layer, demonstrated an even greater reduction in forming defects in the case of forming the pocket of the blister package to a relatively large depth in comparison with Examples 6 and 7, in which the values of nominal tensile strain at break of the first reinforcing layer and second reinforcing layer are equal.

Moreover, in the case of having measured in compliance with JIS K7127, Examples 1, 2 and 5, in which nominal tensile strain at break of the first reinforcing layer is smaller than nominal tensile strain at break of the second reinforcing layer, demonstrated an even greater reduction in forming defects in the case of forming the pocket of the blister package to a relatively large depth in comparison with Examples 3 and 4, in which nominal tensile strain at break of the first reinforcing layer is greater than nominal tensile strain at break of the second reinforcing layer.

In addition, Example 8 and Reference Example 1, in which the total thickness of the reinforcing layers is large, demonstrated a greater reduction in forming defects in the case of forming the pocket of the blister package to a relatively large depth in comparison with Comparative Example 2, in which the thickness of the reinforcing layer is small.

### BRIEF DESCRIPTION OF THE REFERENCE SYMBOLS

- 100, 200: Blister package
- 300: Contents
- 10: Laminate for blister package
- 1: Substrate layer
- 2: Aluminum foil layer
- 3: Reinforcing layers
- 3a: First reinforcing layer
- 3b: Second reinforcing layer
- 3c: Optional reinforcing layer
- 4: Absorbing layer
- 4a: Outer skin layer
- 4b: Absorbent-retaining layer
- 4c: Inner skin layer
- 5: Cover
- 5a: Thermoplastic resin layer
- 5b: Metal layer

## Claims

1. A laminate (10) for a blister package (100, 200), comprising, in the following order, a substrate layer (1), an aluminum foil layer (2), a first reinforcing layer (3a), a second reinforcing layer (3b) and an absorbing layer (4), wherein, measured in compliance with JIS K7127, the absolute value of the difference between nominal tensile strain at break of the first reinforcing layer (3a) and nominal tensile strain at break of the second reinforcing layer (3b) is 10 % or more.

2. The laminate (10) for a blister package (100, 200) according to claim 1, wherein, measured in compliance with JIS K7127, the nominal tensile strain at break of the first reinforcing layer (3a) is smaller than the nominal tensile strain at break of the second reinforcing layer (3b).

3. The laminate (10) for a blister package (100, 200) according to claim 1 or 2, wherein, measured in compliance with JIS K7127, the nominal tensile strain at break of the first reinforcing layer (3a) is 20 % to 70 %.

4. The laminate (10) for a blister package (100, 200) according to any one of claims 1 to 3, wherein, measured in compliance with JIS K7127, the nominal tensile strain at break of the second reinforcing layer (3b) is 70 % to 260 %.

5. The laminate (10) for a blister package (100, 200) according to any one of claims 1 to 4, further having one or more reinforcing layers (3c) between the second reinforcing layer (3b) and the absorbing layer (4).

6. The laminate (10) for a blister package (100, 200) according to any one of claims 1 to 5, wherein, the total thickness of the reinforcing layers is 70 µm to 200 µm.

7. The laminate (10) for a blister package (100, 200) according to any one of claims 1 to 6, wherein the first reinforcing layer (3a) contains a resin selected from polyimide, polyvinyl chloride, polyethylene terephthalate and mixtures thereof.

8. The laminate (10) for a blister package (100, 200) according to any one of claims 1 to 7, wherein the second reinforcing layer (3b) contains a resin selected from the group consisting of polyvinyl chloride, polyethylene terephthalate and mixtures thereof.

9. The laminate (10) for a blister package (100, 200) according to any one of claims 1 to 8, wherein the absorbing layer (4) comprises, in the following order, an outer skin layer (4a) on the side of the substrate layer (1), an absorbent-retaining layer (4b) having an absorbent and a binder resin, and an inner skin layer (4c).

10. The laminate (10) for a blister package (100, 200) according to any one of claims 1 to 9, wherein the substrate layer (1) contains a resin selected from the group consisting of polyethylene-based resin, polyvinyl chloride, polyvinylidene chloride, polychlorotrifluoroethylene, polypropylene-based resin, saturated polyester, polyamide and mixtures thereof.

11. A blister package (100, 200), comprising the laminate (10) according to any one of claims 1 to 10, and a cover (5) having an aluminum foil layer (5b) different from the aluminum foil layer (2) of said laminate (10) and a resin layer (5a), wherein the absorbing layer (4) of the laminate (10) and the resin layer (5b) of the cover (5) are at least partially adhered, and a pocket is formed in the laminate (10) so that contents can be contained between the laminate (10) and the cover (5).

12. A blister package (100, 200), wherein two of the laminates (10) according to any one of claims 1 to 10 are at least partially adhered while mutually facing the absorbing layer (4), and a pocket is formed in the two laminates so that contents can be contained in the pocket.

13. A blister packaging product having the blister package (100, 200) according to claim 11 or 12 and contents contained in the pocket.

## Patentansprüche

1. Laminat (10) für eine Blisterpackung (100, 200), das in der folgenden Reihenfolge eine Substratschicht (1), eine Aluminiumfolienschicht (2), eine erste verstärkende Schicht (3a) und eine zweite verstärkende Schicht (3b) und eine absorbierende Schicht (4) aufweist, wobei gemäß JIS K7127 der absolute Wert der Differenz zwischen der nominalen Zugspannung beim Bruch der ersten verstärkenden Schicht (3a) und der nominalen Zugspannung beim Bruch der zweiten verstärkenden Schicht (3b) gemessen wird, 10 % oder mehr beträgt.

2. Laminat (10) für eine Blisterpackung (100, 200) nach Anspruch 1, wobei die nominale Zugspannung der ersten verstärkenden Schicht (3a), die in Übereinstimmung mit JIS K7127 gemessen wird, kleiner als die nominale Zugspannung beim Bruch der zweiten verstärkenden Schicht (3b) ist.

3. Laminat (10) für eine Blisterpackung (100, 200) nach Anspruch 1 oder 2, wobei die nominale Zugspannung beim Bruch der ersten verstärkenden Schicht (3a), die gemäß JIS K7127 gemessen wird, 20 % bis 70 % beträgt.

4. Laminat (10) für eine Blisterpackung (100, 200) nach einem der Ansprüche 1 bis 3, wobei die nominale Zugspannung beim Bruch der zweiten verstärkenden Schicht (3b), die in Übereinstimmung mit JIS K7127 gemessen wird, 70 % bis 260 % beträgt.

5. Laminat (10) für eine Blisterpackung (100, 200) nach einem der Ansprüche 1 bis 4, das ferner eine oder mehrere verstärkende Schichten (3c) zwischen der zweiten verstärkenden Schicht (3b) und der absorbierenden Schicht (4) aufweist.

6. Laminat (10) für eine Blisterpackung (100, 200) nach einem der Ansprüche 1 bis 5, wobei die Gesamtdicke der verstärkenden Schichten 70 µm bis 200 µm beträgt.

7. Laminat (10) für eine Blisterpackung (100, 200) nach einem der Ansprüche 1 bis 6, wobei die erste verstärkende Schicht (3a) ein Harz enthält, das aus einem Polyimid, einem Polyvinylchlorid, einem Polyethylenterephthalat und deren Gemischen ausgewählt worden ist.

8. Laminat (10) für eine Blisterpackung (100, 200) nach einem der Ansprüche 1 bis 7, wobei die zweite verstärkende Schicht (3b) ein Harz enthält, das aus der Gruppe ausgewählt worden ist, die ein Polyvinylchlorid, ein Polyethylenterephthalat und deren Gemische umfasst.

9. Laminat (10) für eine Blisterpackung (100, 200) nach einem der Ansprüche 1 bis 8, wobei die absorbierende Schicht (4) in der folgenden Reihenfolge eine äußere Hautschicht (4a) auf der Seite der Substratschicht (1), eine absorbierende Rückhalteschicht (4b), das ein Absorptionsmittel und ein Bindemittelharz aufweist, und eine innere Hautschicht (4c) aufweist.

10. Laminat (10) für eine Blisterpackung (100, 200) nach einem der Ansprüche 1 bis 9, wobei die Substratschicht (1) ein Harz enthält, das aus der Gruppe ausgewählt worden ist, die ein auf Polyethylen basierendes Harz, ein Polyvinylchlorid, ein Polyvinylidenchlorid, ein Polychlortrifluorethylen, ein auf Polypropylen basierendes Harz, einen gesättigten Polyester, ein Polyamid und deren Gemische umfasst.

11. Blisterpackung (100, 200), welche das Laminat (10) nach einem der Ansprüche 1 bis 10 und eine Abdeckung (5) aufweist, die eine Aluminiumfolienschicht (5b), die sich von der Aluminiumfolienschicht (2) des Laminats (10) unterscheidet, und eine Harzschicht (5a) aufweist, wobei die absorbierende Schicht (4) des Laminats (10) und die Harzschicht (5b) der Abdeckung (5) zumindest teilweise verklebt sind und eine Tasche in dem Laminat (10) auf eine solche Weise ausgebildet worden ist, dass Inhalte zwischen dem Laminat (10) und der Abdeckung (5) enthalten sein können.

12. Blisterpackung (100, 200), bei der zwei der Laminate (10) nach einem der Ansprüche 1 bis 10 zumindest teilweise miteinander verklebt worden sind, während sie gegenseitig der absorbierenden Schicht (4) zugewandt sind, und eine Tasche in den zwei Laminate auf eine solche Weise ausgebildet worden ist, dass der Inhalt in der Tasche enthalten sein kann.

13. Blisterpackungsprodukt mit der Blisterpackung (100, 200) nach Anspruch 11 oder 12 und Inhalt, der in der Tasche enthalten ist.

## Revendications

1. Stratifié (10) destiné à un blister (100, 200), comprenant, dans l'ordre suivant, une couche de substrat (1), une couche de feuille d'aluminium (2), une première couche de renfort (3a), une seconde couche de renfort (3b) et une couche absorbante (4), dans lequel, lorsqu'elle est mesurée conformément à la norme JIS K7127, la valeur absolue de la différence entre l'allongement en traction normal lors d'une rupture de la première couche de renfort (3a) et l'allongement en traction normal lors d'une rupture de la seconde couche de renfort (3b) est de 10% ou plus.

2. Stratifié (10) destiné à un blister (100, 200) selon la revendication 1, dans lequel, lorsqu'il est mesuré conformément à la norme JIS K7127, l'allongement en traction normal lors d'une rupture de la première couche de renfort (3a) est inférieur à l'allongement en traction normal lors d'une rupture de la seconde couche de renfort (3b).

3. Stratifié (10) destiné à un blister (100, 200) selon la revendication 1 ou 2, dans lequel, lorsqu'il est mesuré conformément à la norme JIS K7127, l'allongement en traction normal lors d'une rupture de la première couche de renfort (3a) est de 20% à 70%.

4. Stratifié (10) destiné à un blister (100, 200) selon l'une quelconque des revendications 1 à 3, dans lequel, lorsqu'il est mesuré conformément à la norme JIS K7127, l'allongement en traction normal lors d'une rupture de la seconde couche de renfort (3b) est de 70% à 260%.

5. Stratifié (10) destiné à un blister (100, 200) selon l'une quelconque des revendications 1 à 4, comprenant en outre une ou plusieurs couches de renfort (3c) entre la seconde couche de renfort (3b) et la couche absorbante (4).

6. Stratifié (10) destiné à un blister (100, 200) selon l'une quelconque des revendications 1 à 5, dans lequel l'épaisseur totale des couches de renfort est de 70 µm à 200 µm.

7. Stratifié (10) destiné à un blister (100, 200) selon l'une quelconque des revendications 1 à 6, dans lequel la première couche de renfort (3a) contient une résine choisie parmi un polyimide, du polychlorure de vinyle, du polyéthylène téréphtalate, et des mélanges de ceux-ci.

8. Stratifié (10) destiné à un blister (100, 200) selon l'une quelconque des revendications 1 à 7, dans lequel la seconde couche de renfort (3b) contient une résine choisie parmi le groupe consistant en du polychlorure de vinyle, du polyéthylène téréphtalate, et des mélanges de ceux-ci.

9. Stratifié (10) destiné à un blister (100, 200) selon l'une quelconque des revendications 1 à 8, dans lequel la couche absorbante (4) comprend, dans l'ordre suivant, une couche de revêtement externe (4a) sur le côté de la couche de substrat (1), une couche de rétention d'absorbant (4b) ayant un absorbant et une résine à base de liant, et une couche de revêtement interne (4c).

10. Stratifié (10) destiné à un blister (100, 200) selon l'une quelconque des revendications 1 à 9, dans lequel la couche de substrat (1) contient une résine choisie parmi le groupe consistant en une résine à base de polyéthylène, du polychlorure de vinyle, du chlorure de polyvinylidène, du polychlorotrifluoroéthylène, une résine à base de propylène, un polyester saturé, un polyamide, et des mélanges de ceux-ci.

11. Blister (100, 200) comprenant le stratifié (10) selon l'une quelconque des revendications 1 à 10, et un revêtement (5) ayant une couche de feuille d'aluminium (5b) différente de la couche de feuille d'aluminium (2) dudit stratifié (10) et une couche de résine (5a), dans lequel la couche absorbante (4) du stratifié (10) et la couche de résine (5b) du revêtement (5) sont au moins partiellement collées, et une poche est formée dans le stratifié (10) de sorte que le contenu puisse être contenu entre le stratifié (10) et le revêtement (5).

12. Blister (100, 200), dans lequel deux des stratifiés (10) selon l'une quelconque des revendications 1 à 10 sont au moins partiellement collés tandis qu'ils font mutuellement face à la couche absorbante (4), et une poche est formée dans les deux stratifiés de sorte que le contenu puisse être contenu dans la poche.

13. Produit d'emballage sous forme de blister ayant le blister (100, 200) selon la revendication 11 ou 12, et un contenu dans la poche.
